# EUROPEAN PATENT SPECIFICATION

(11) **EP 2 311 667 B1**
(45) Date of publication and mention of the grant of the patent: **12.09.2012**
(21) Application number: 10181481.2
(22) Date of filing: 24.10.2005
(51) Int. Cl.: B60F 3/00, B62K 5/00, B63B 35/73

(54) **An amphibious vehicle**
Amphibienfahrzeug
Véhicule amphibie

(30) Priority: 22.10.2004 GB 0423463; 22.10.2004 GB 0423483; 22.10.2004 GB 0423517; 22.10.2004 GB 0423470; 22.10.2004 GB 0423474
(43) Date of publication of application: 20.04.2011
(62) Divisional of application: 05796179.9
(73) Proprietor: Gibbs Technologies Ltd., Warwickshire CV11 4LY (GB)
(72) Inventor: Briggs, Stephen John, Auckland (NZ); Longdill, Simon James, Auckland (NZ); Weekers, Hans, Auckland (NZ); Jeffrey, Glen Michael, Auckland (NZ)
(74) Representative: Hicks, Paul Edward

(56) References cited:
- WO-A-2004/020228
- JP-A- 4 063 709
- US-A- 4 744 324
- US-A- 5 690 046
- US-B1- 6 182 784
- US-B1- 6 672 916
- US-B2- 6 505 694

## Description

The present invention relates to an amphibious vehicle and in particular, to a sit-astride amphibious vehicle having all-terrain vehicle (ATV) capability on land.

Amphibious vehicles are now well known in the art. However, the present applicant has identified a need for an amphibious vehicle having ATV capability on land and which performs as a high speed personal watercraft on water. A number of prior art proposals have proceeded to prototype. However, such vehicles have opted to either optimise operation in the marine mode or, alternatively, operation in the land mode. The result is an amphibious vehicle having poor performance in one mode of operation or the other.

Sit astride amphibious vehicles have previously been described such as in US 5690046 to Grzech. Grzech teaches an amphibious tricycle. The problem identified by the inventor in this document, was to provide his personal watercraft (PWC) with limited on land capability in order that it was at least partially mobile when going ashore. GRZECH is limited in that it is only suitable for travel on well made up roads when operating in a land mode. This is because the vehicle has only three wheels and these are connected to the remainder of the vehicle by a suspension arrangement which is adapted to cope only with smooth road surfaces and does not have the suspension travel suitable for off-road use of the vehicle. Also, GRZECH needs a large heat exchanger which protrudes through the keel of the vehicle to provide the very necessary cooling required to cool the highly overpowered marine combustion engine. This dictates against off-road land use since the heat exchanger could easily be damaged in such a use. GRZECH has opted for a single steerable front wheel since this is easiest to provide in an adaptation of a personal watercraft.

Document WO 2004/020228 A1 to Gibbs discloses an amphibian vehicle having retractable front wheels and retractable rear wheels. The wheels are each pivoted about an axis running fore and aft along the vehicle. The vehicle has a hull conformed for planing.

Document JP 04 063709 A to Honda discloses an amphibious all-terrain vehicle comprising a sit-astride seat and four wheels, two of the the wheels being front steerable wheels, which are connected to handlebars which can be operated by a driver to steer the vehicle. The vehicle further comprises an engine which in the land mode of the vehicle is connected to at least one of the wheels to drive the wheel, and marine propulsion means to propel the vehicle on water.

Document US 6,505,694 B2 to Maguire discloses a recreational vehicle which has a body which may be configured for land use or as a boat hull, the vehicle also having a pair of non interconnected spaced apart front wheels, an endless track located rearwardly of an intermediate of the spaced apart front wheels, a motor operatively connected to a drive at least the endless track and optionally the front wheels. The vehicle is able to handle most types of snow and land conditions and can be configured to operate in water if so desired.

Accordingly, there exists the need for an all terrain high speed amphibian vehicle, more particularly, having at least four retractable wheel assemblies.

The present invention provides an amphibious personal watercraft vehicle according to claim 1.

The following clauses describe further aspects of the present invention:
1. An amphibious vehicle comprising:
   a sit-astride seat,
   a planing hull,
      at least four wheels, each of which is movable between an extended land mode location and a retracted water mode location two of the wheels being front steerable wheels, which are, at least in the land mode of the vehicle, connected to handlebars which can be operated by a driver to steer the vehicle,
   an engine which in the land mode of the vehicle is connected to at least one of the wheels to drive the wheel, and
   marine propulsion means to propel the vehicle on water.
2. An amphibious vehicle as set forth in clause 1 wherein:
   the engine drives the marine propulsion means to propel the vehicle on water.
3. An amphibious vehicle as set forth in clause 1 or clause 2 comprising additionally:
   a speed change transmission giving the vehicle in forward motion on land a plurality of different gear ratios between the engine and the driven wheel(s).
4. An amphibious vehicle as set forth in any one of the preceding clauses wherein:
   all of the four wheels are each pivoted about an axis running fore and aft along the vehicle when moved between the land mode and the water mode locations thereof.
5. An amphibious vehicle as set forth in any one of the preceding clauses wherein:
   the two front steerable wheels in land mode locations thereof are located on opposite sides of the vehicle, spaced apart transversely across the vehicle by a first track width;
   the two other wheels of the four are not connected to the handlebars to be steered thereby and are located at the rear of the vehicle on opposite sides of the vehicle, spaced apart transversely across the vehicle by a second track width greater than the first track width.
6. An amphibious vehicle as set forth in any one of the preceding clauses wherein:
   a separate spring and damper unit is provided for each wheel.
7. An amphibious vehicle as set forth in any one of the preceding clauses wherein:
   a track rod is mounted to extend transversely across the vehicle; the track rod is mounted by mounting means which allow the track rod to be slid along the axis thereof transversely across the vehicle by rotation of the handlebars; the track rod is pivotally connected at one end to a first front wheel and is pivotally connected at a second end to a second front wheel; and the front wheels are pivotally mounted on supporting suspension arrangements for steering rotation under control of the track rod.
8. An amphibious vehicle as set forth in any one of clauses 3 to 7 wherein:
   the speed change transmission comprises a manually operable gearbox and a manually operable gear selection means are provided operable by a driver of the vehicle to select one of the gear ratios.
9. An amphibious vehicle as set forth in any one of clauses 3 to 7 wherein:
   the speed change transmission comprises an automatic gearbox.
10. An amphibious vehicle as set forth in any one of clauses 3 to 7 wherein:
   the speed change transmission comprises a continuously variable transmission.
11. An amphibious vehicle as set forth in any one of the preceding clauses wherein:
   each road wheel is pivoted through 45° or more during retraction.
12. An amphibious vehicle as set forth in any one of the preceding clauses wherein:
   the front pair of wheels steerable by the handlebars are spaced apart transversely across the vehicle by a first track width when in land mode and a rear pair of wheels spaced apart transversely across the vehicle by a second track width when in land mode; and the planing hull has a maximum beam width which is less than both the first and second track widths.
13. An amphibious vehicle as set forth in clause 12 wherein:
   the first track width is greater than the second track width.
14. An amphibious vehicle as set forth in any one of the preceding clauses wherein:
   a separate spring and damper assembly is provided for each wheel.
15. An amphibious vehicle as set forth in any one of the preceding clauses wherein:
   the planing hull is formed as a single component and the vehicle has one or more deck components all joined to the hull component along a join line which extends around an entire periphery of the vehicle at a level above a water line of the vehicle in water; and
   the or at least one of the deck components forms a majority of an upwardly facing surface of the vehicle and is demountable to allow access to the engine located there beneath.
16. An amphibious vehicle as set forth in clause 15 wherein:
   the hull and each deck component is formed of a composite of fibres set in resin and localised areas of at least some of the deck components are provided with fibre reinforcement additional to the fibre reinforcement in a remainder of the component(s) to provide a greater structural strength in such areas, whereby reinforced areas provide load paths for transmission of loading of the vehicle and the load paths extend around an entire transversely viewed periphery of the vehicle to resist torsion loads acting to twist a front part of the vehicle relative to a rear part of the vehicle.
17. An amphibious vehicle as set forth in any one of the preceding clauses wherein:
   the engine is mounted on a frame releasably connected to the hull, the vehicle also comprising a transmission connecting the engine to the driven wheel(s), at least part of the transmission also being mounted on the frame.
18. An amphibious vehicle as set forth in clause 17 wherein:
   a suspension system is provided for the road wheels and the suspension system is also mounted on the frame.
19. An amphibious vehicle as set forth in clause 17 or clause 18 wherein:
   a steering mechanism is connected between the handlebars at the front steerable wheels and the steering mechanism is also mounted on the frame.
20. An amphibious vehicle as set forth in any one of the preceding clauses wherein:
   the vehicle body defines a pair of footwell areas spaced apart on both sides of the sit-astride seat with the vehicle body having sill portions positioned laterally outside the footwell areas.
21. An amphibious vehicle as set forth in clause 20 wherein buoyancy chambers are provided in the sill portions of the vehicle.

Preferred embodiments of the present invention will now be described by way of example only with reference to the accompanying drawings in which;
Figure 1 is a perspective view from above of an amphibious vehicle according to the present invention;
Figure 2 is a perspective view from below of the amphibious vehicle of Figure 1;
Figure 3 is a top plan view of the amphibious vehicle of Figure 1;
Figure 4 is a bottom plan view of the amphibious vehicle of Figure 1;
Figure 5 is a side elevation view of the amphibious vehicle of Figure 1;
Figure 6 is a front elevation view of the amphibious vehicle according to Figure 1;
Figure 7 is a rear end elevation view of the amphibious vehicle of Figure 1;
Figure 8 is a view of the vehicle of Figure 1 in which the top surface of the vehicle has been made transparent;
Figure 9 is a perspective view of a steering and suspension assembly of the vehicle;
Figure 10 is a front elevation view of the steering and suspension assembly of Figure 9, with the wheels in their lowered land mode operation location;
Figure 11 is the same front elevation view as Figure 10, but with the wheels raised in marine mode operation;

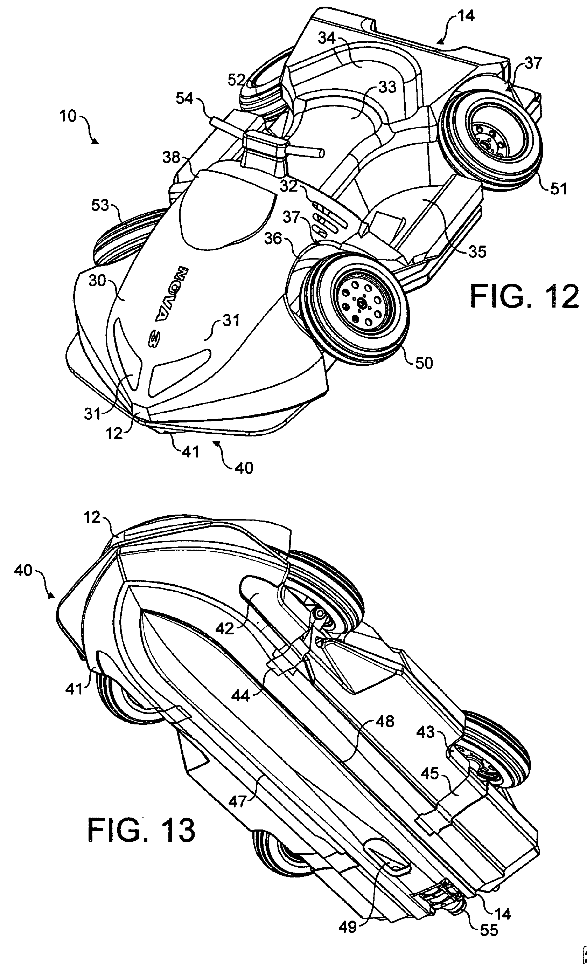

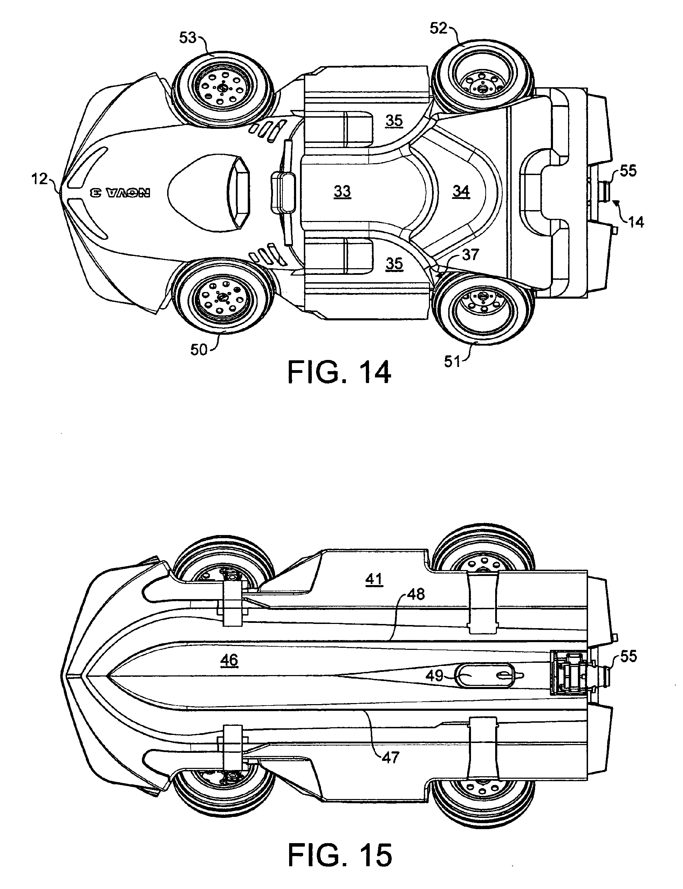

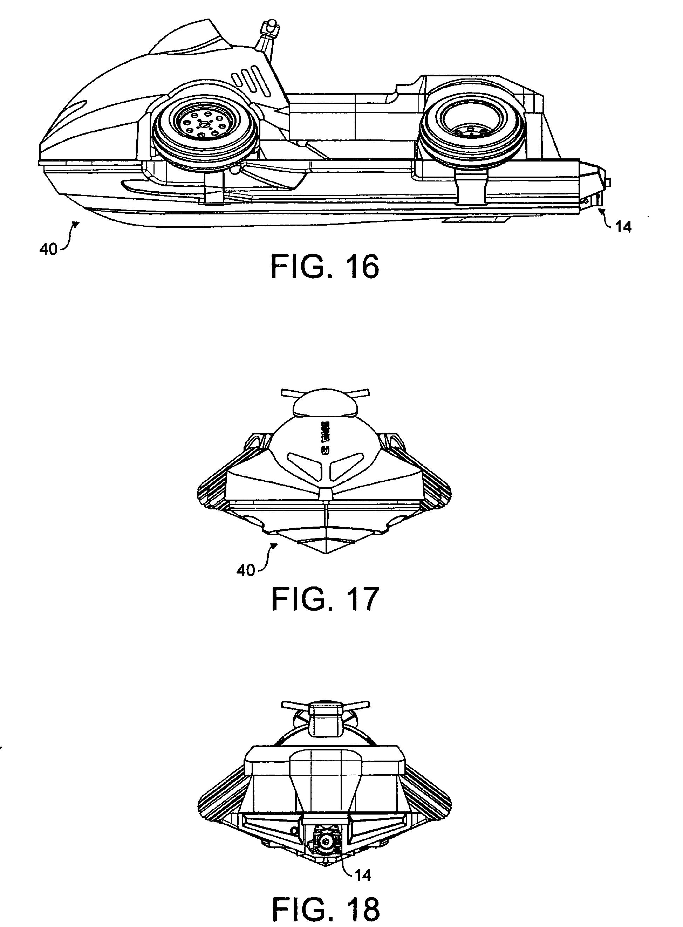

Figures 12-18 correspond to the views shown in Figures 1-7 save that the views shown in Figures 13 to 18 show the amphibious vehicle with its wheel assemblies retracted for use in marine mode;
Figure 19 is a perspective view of a rolling chassis of the vehicle; and
Figure 20 is a diagrammatic view of a transmission of the vehicle.

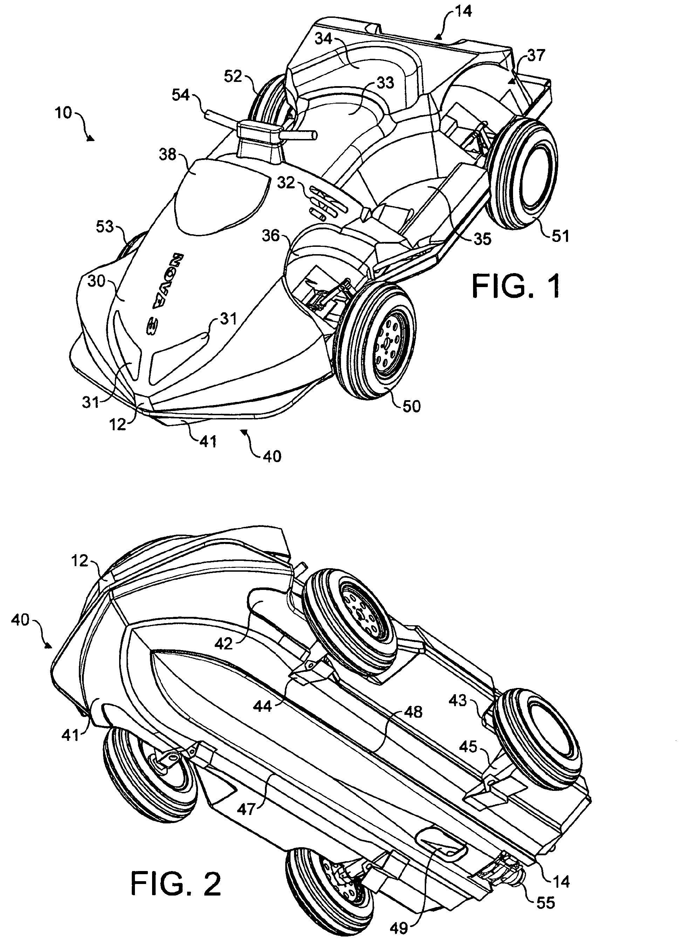

Referring now to Figures 1 and 2, there can be seen an amphibious vehicle 10 having a forward bow end 12 and a rear stern end 14.

The vehicle 10 has four road wheels 50,51,52,53 which are connected to the remainder of the vehicle by a wheel suspension system which includes a wheel retraction mechanism for moving the wheels 50,51,52,53 between a lowered state for road use and a raised state for marine use. The front wheels 50 and 53 are steerable and handlebars 54 enable steering of these wheels. The rear wheels 51,52 are driven to propel the vehicle on land. A jet drive unit 55 (see Figure 2) provides propulsion in marine use.

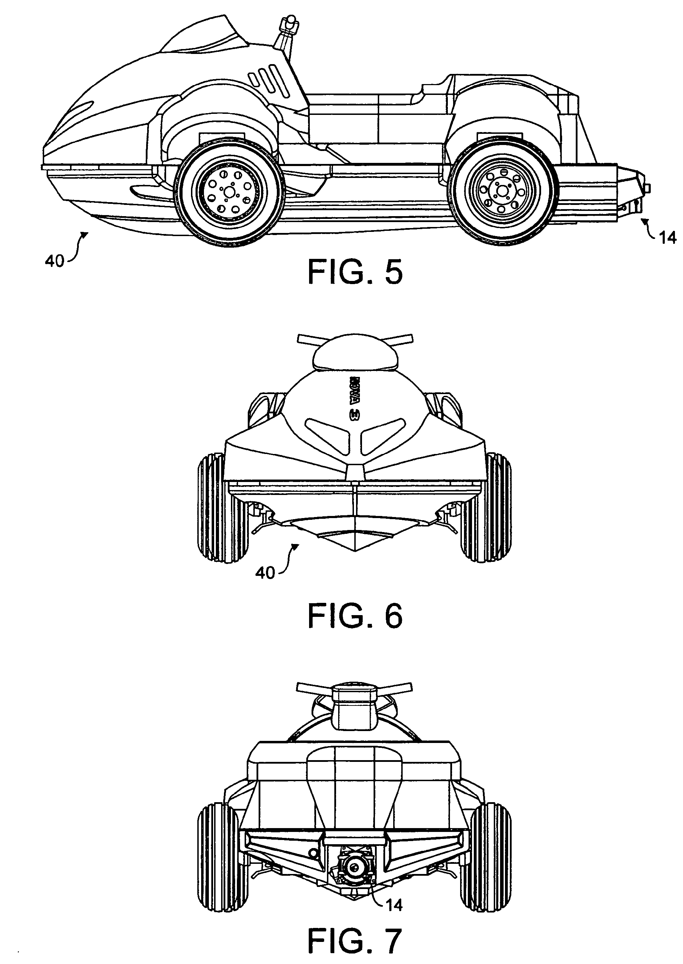

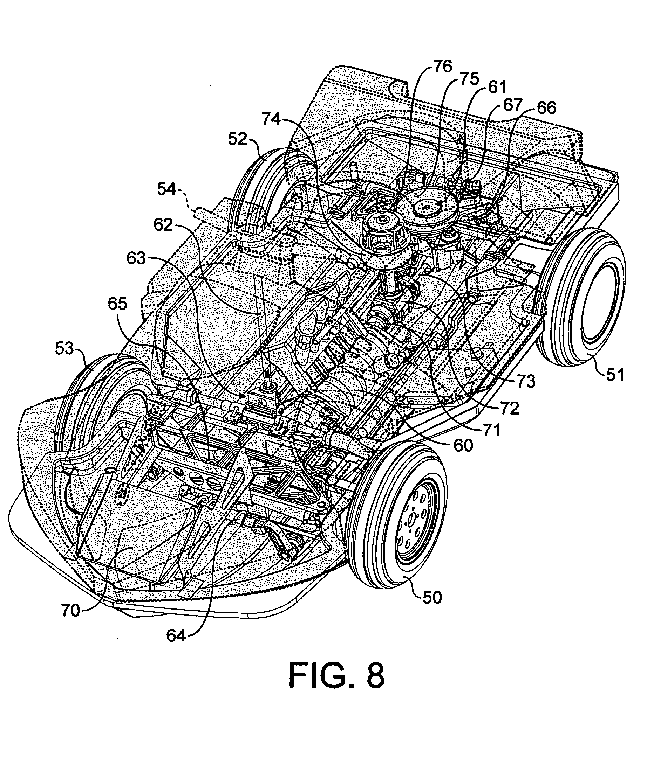

The structure of the amphibious vehicle 10 comprises an upper deck section 30 and a lower hull section 40. The upper deck structure 30 is sealed to the lower hull section 40 around a peripheral planar edge which is above the water line when the amphibious vehicle 10 is displaced in water -(as can best be seen in Figures 5 and Figures 8). The complete upper deck section 30 is detachable from the lower hull section 40 as a single unit; this permits ease of access to internal components of vehicle for servicing, etc.

Air inlet openings 31 provide an entry for cooling air (e.g. fan-assisted) for use by the cooling systems of the amphibious vehicle 10. Air entrained via inlets 31 is eventually exhausted via outlets 32. Between air inlet 31 and air outlet 32, a dorade system is installed to prevent the ingress of water. The dorade system facilitates righting of the vehicle on water by use of a labyrinthine air inlet passage system to prevent the ingress of water should the amphibious vehicle 10 be inverted in use in the marine mode. Sit-astride seats 33 and 34 are provided for a driver and a passenger of the amphibious vehicle 10. A footwell area 35 is provided either side of the sit-astride seats 33, 34, each shrouded by bodywork positioned laterally outside of the footwell area 35 to provide protection. These footwell areas 35 may be provided with means to bail automatically any water shipped in use of the amphibious vehicle 10.

Front and rear wheel arches 36, 37 are provided on either side of the amphibious vehicle 10 so as to contain a retractable wheel assembly which is retracted when the amphibious vehicle 10 is operating in the marine mode. An instrument panel 38 is provided ahead of the steering controls to convey relevant parameters of the amphibious vehicle 10 to the driver. Additionally, rear view mirrors (not shown) may be provided as a visual aid to the driver. Furthermore, navigation lights may also be provided within or on the upper deck structure 30 in accordance with the local legislative requirements.

The upper deck structure 30 forms an integral part of the entire structure of the vehicle. It is a structural component and not merely cladding. Typically it will take the form of a composite structure (e.g. glass fibres or carbon fibres set in resin) although any suitable manufacturing method may be employed. Where localised areas of strength are required in the upper deck structure 30, extra layers or mats of fibres may be laid down during manufacture. The deck 30 will be formed with localised reinforced areas in order to provide a complete force transmitting path extending around the vehicle in a complete circle in a plane orthogonal to a longitudinal axis of the vehicle, in order to provide resistance to torsional loads on the vehicle.

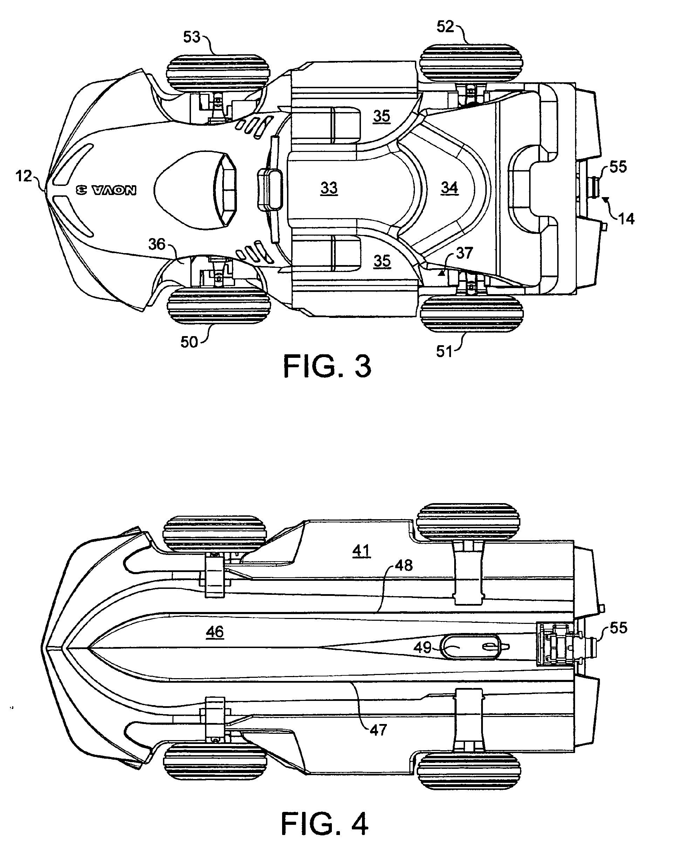

Referring now to Figures 2 and 4 the underside of the hull can be seen extending from the front bow section 12 to the rear stern section 14. Starting from the planar interface with the upper deck section 30, there is a relatively shallow section 41 extending around a periphery of the amphibious vehicle 30 and in this section there are provided front and rear wheel arches 42, 43. These areas of the hull provide stability when the amphibious vehicle 10 is operated at high speed in marine mode because they provide enclosed volumes spaced laterally from the centre line of the amphibious vehicle 10. As such, when cornering sharply, for example, an increase in righting force is experienced as the angle of lean increases. The bodywork lateral of the footwell areas could be provided with buoyancy inserts which would provide righting forces spaced from the vehicle centre line when the vehicle corners on water.

Cutouts are provided in the hull on either side of the centre line of the vehicle in the region of the front and rear wheel arches 42, 43 to provide slots through which the retractable wheel assemblies can be protracted and retracted. Suitably profiled covers 44, 45 are provided as part of the wheel assemblies so as to reconstruct the lines of the hull when the wheel assemblies are retracted for use in marine mode.

A lower V section 46 depends from the mid section 41 and is provided with a keel section running from the bow 12 of the amphibious vehicle to approximately halfway along the length of the vehicle. At this point, the keel splits to incorporate a water intake area 49 for a jet drive marine propulsion unit of the amphibious vehicle 10. The design of the hull 40 is critical in determining the performance achieved when the amphibious vehicle 10 is operated in the marine mode.

The present applicants have spent considerable time and effort in the design of the hull 40 which has resulted in a rather surprising shape in that usually expected for a planing water craft. The dead rise angle of the hull is substantially 20.7 degrees along substantially its entire length. This compares with traditional planing hulls which start at the bow section with a very steep dead rise angle and these dead rise angles become more shallow along the length of the hull towards the stern, typically ending at 5 degrees or less of dead rise angle.

Since the seating of the vehicle is arranged longitudinally along the vehicle, the vehicle is narrower than a passenger car. Aligning the engine longitudinally along the vehicle gives a body shape which is narrow in beam and deep. Rather than adopting the flat planing hull common in the prior art, the applicant has adopted a greater dead rise angle for the agile marine handling this provides, accepting that this gives a need for a suspension with a lot of travel to give adequate ground clearance on land. Large wheels also enable off-road usage, although they give problems of packaging. Whereas before vehicles such as that of GRZECH strove to keep the track width of the wheels within the beam of the vehicle, the applicant has realised that better land mode operation can be achieved if the track width of the vehicle is greater than the beam of the hull. The approach adopted by the applicant does mean that wheels must be retracted through a large angle in order to be clear of the vehicle waterline in marine use, but the strategy does provide for a vehicle capable both on land and on water.

The hull 40 is additionally provided with hydrodynamic aids in the form of strakes 47, 48 and the profiled suspension arm covers 44, 45 previously referred to. Even with the small footprint of the hull of the amphibious vehicle 10, the hull design 40 is capable of propelling the amphibious vehicle 10 up onto the plane with little difficulty in fast time periods. Furthermore, on-water performance of the amphibious vehicle 10 is not compromised and adequate ground clearance is available in operating the amphibious vehicle 10 in land mode as an all terrain vehicle.

Figure 8 illustrates location of the major internal components of the amphibious vehicle 10.

In Figure 8 there can be seen a prime mover 60 which is a multi-cylinder internal combustion engine. It is connected by a transmission 61 to drive the rear wheels 51,52 during land use of the vehicle and to drive the jet drive unit 55 during marine use. As described in other applications of the applicant the jet drive unit is permanently connected to the engine 60 to be driven thereby at all times, whilst the wheels 51 and 52 are connected to the engine 52 only in their lowered land use positions.

In Figure 8 it can be seen that the handlebars 54 are connected by a steering column 62 to a steering mechanism 63 for steering the front wheels 50,53 of the vehicle which is described in detail in another application of the applicant. Spring and damper assemblies 64,65,66,67 are provided in-board for the wheels 50,51,52,53. Two wheel retraction hydraulic actuators (which cannot be seen in the Figure) are provided, one for the front wheels 50,53 and one for the rear wheels 51,52 to allow the wheels to be retracted from their lowered positions shown in Figure 8 to their raised positions. These hydraulic actuators will be powered by hydraulic fluid supplies from a pump (not shown) powered by the engine 60.

The seating in the vehicle is provided substantially above the vehicle powertrain, with the handlebars located roughly halfway along the length of the vehicle, this comparing with traditional PWC designs which locate the handlebars roughly two thirds along the length of the vehicle (measured from the back). This gives a good weight distribution for both marine and land use.

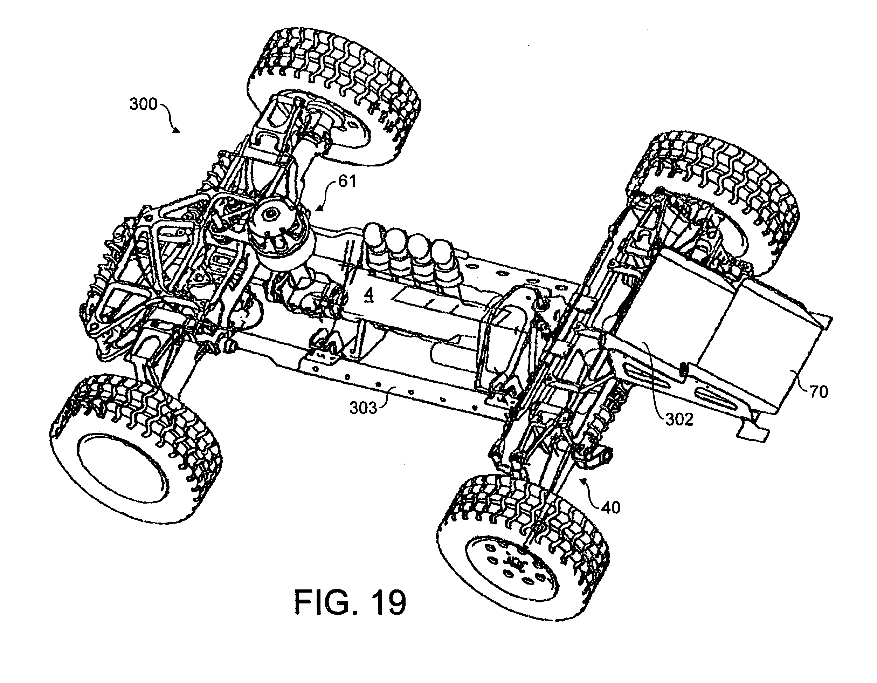

The powertrain components illustrated in Figure 8, i.e. the engine 60, the transmission 61 are built up on a frame platform which is then connected to the hull; this gives considerable advantage for ease of manufacture. Indeed it is envisaged that a chassis could be constructed with a frame supporting all of the wheel suspension components, the wheel steering mechanism, the wheel retraction mechanism, the engine 60 and the transmission 61. This would considerably aid construction and repair. This is illustrated in Figure 19 where a rolling chassis 300 of the vehicle can be seen stripped of the surrounding hull and deck sections. In the Figure there can be seen the engine, the transmission 61 as well as the suspension assemblies for the front and rear wheels and radiators 70, 302 of the cooling system of the vehicle, all mounted to a common supporting structure 303.

The radiator 70 can also be seen in Figure 8 located at the front of the vehicle which will cool the vehicle's engine, at least in land use. The vehicle's engine can also be cooled by a water/water heat exchanger (not shown) in marine use, with water being drawn from beneath the vehicle to cool water used by the engine cooling system.

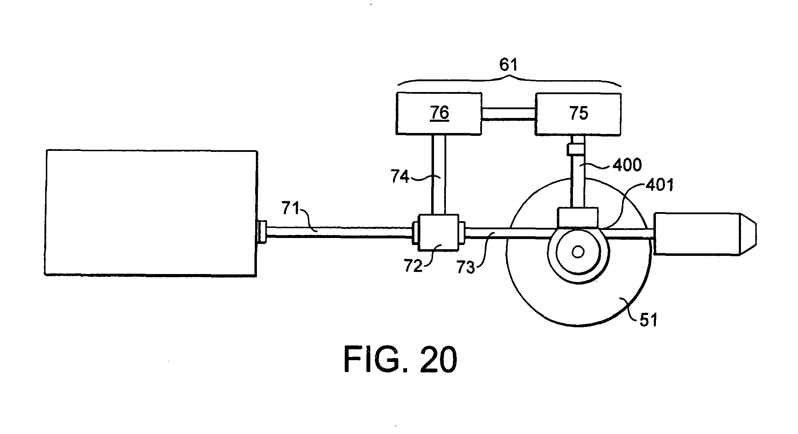

The transmission 61 comprises an output shaft 71 leading drive from the engine to a gearbox 72 which has two output shafts; a horizontally extending shaft 73 taking drive to the jet drive unit 55 and a vertically extending shaft 74 leading to a continuously variable transmission arrangement, the pulleys 75,76 of which can be seen in Figure 8 and which is shown schematically in Figure 20. As shown in Figure 20, the continuously variable transmission has a vertically extending output shaft 400 which extends downwardly to a differential 401 through which drive is relayed to the rear wheels 51,52. The CVT transmission 61 could be replaced in other embodiments by a conventional automatic gearbox or a manual gearbox.

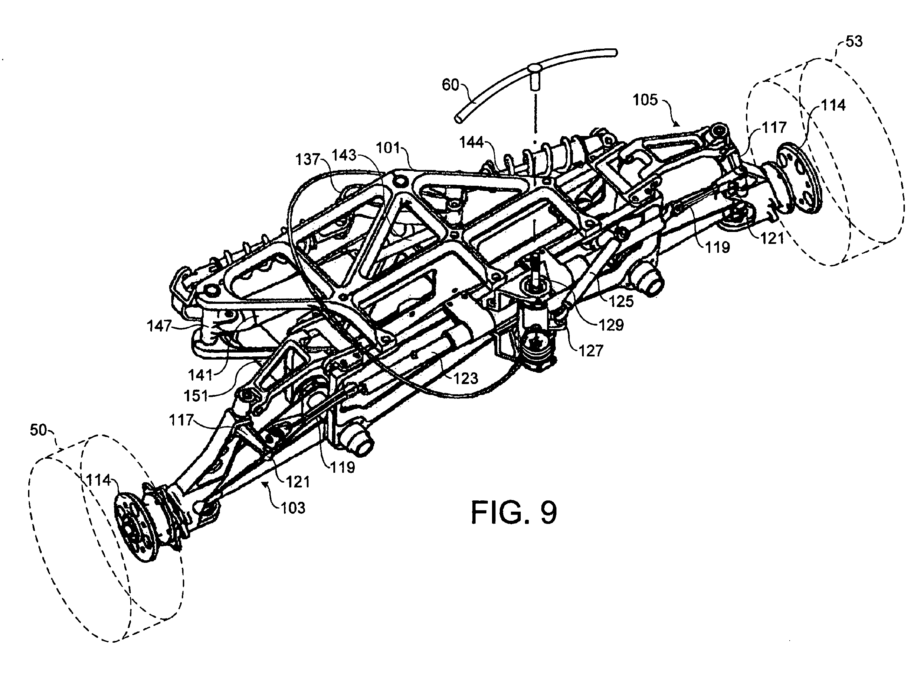

Figures 9 to 11 show the front steering and suspension assemblies of the vehicle. A frame 101 has swingably mounted to it left and right suspensions 103 and 105 as seen from the rear of the vehicle.

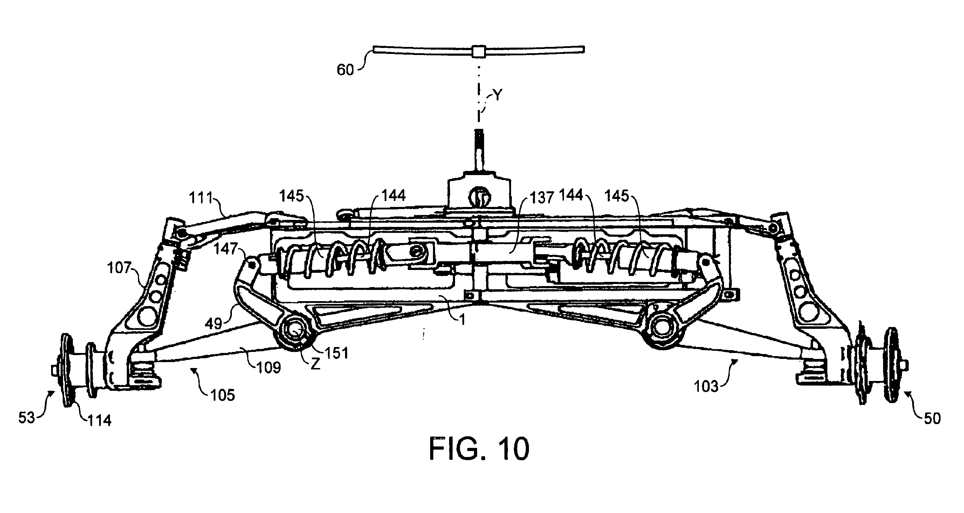

Each suspension 103 and 105 comprises an upright member 107 (see Figure 10) connected to a lower suspension arm 109 and an upper wishbone 111. Wheels 50 and 53 (shown in Figure 1) are each mounted to a hub 114, which is rotatably carried on upright member 107.

Extending from each of the upright members 107 is a steering arm 117 (see especially Figure 9) to which is pivotally connected a track rod extension 119 at its outer end 121. The inner end of extension 119 is connected to a track rod 123. The track rod 123 is moved transversely by means of link 125 which is connected to a swingable connection 127 on steering column 129.

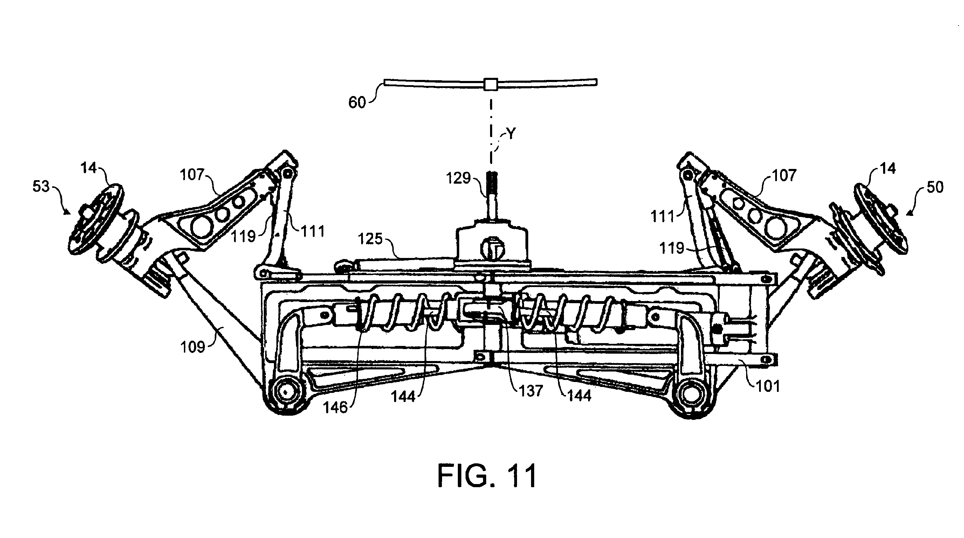

An actuator 141 having piston rod 143 acts on one arm of swing arm 137 to pivot the arm, the outer ends of which are connected to piston rods 144 of suspension dampers 145 (see Figures 10 and 11), which are surrounded by coil springs 146. The base of each damper 145 is connected at 147 to retraction arm 149 pivotally mounted at 151 to frame 101. On retraction the suspension swings about an axis running fore and aft longitudinally along the vehicle; a torsion tube 151 rotates and the lower suspension arm 109 rotates with it (compare figures 10 and 11).

Whilst above a single internal combustion engine is used to both drive the wheels is land mode operations and also to power the jet drive, separate engines could be provided, one for the road wheels and another for the jet drive. Also the jet drive could be replaced by a propeller.

## Claims

1. An amphibious personal watercraft vehicle (10) comprising:
a sit-astride seat (33),
a planing hull (40),
at least four wheels (50,51,52,53), each of which is movable between an extended land mode location and a retracted water mode location two of the wheels being front steerable wheels (50,53), which are, at least in the land mode of the vehicle, connected to handlebars (54)
which can be operated by a driver to steer the vehicle,
an engine (60) which in the land mode of the vehicle is connected to at least one of the wheels to drive the wheel, and
marine propulsion means (55) to propel the vehicle on water, wherein:
the at least four wheels are each pivoted about an axis running fore and aft along the vehicle when moved between the land mode and the water mode locations thereof.

2. An amphibious vehicle as claimed in claim 1 wherein:
the engine (60) drives the marine propulsion means to propel the vehicle on water.

3. An amphibious vehicle as claimed in claim 1 or claim 2 comprising additionally:
a speed change transmission (61) giving the vehicle in forward motion on land a plurality of different gear ratios between the engine and the driven wheel(s).

4. An amphibious vehicle as claimed in any one of the
preceding claims wherein:
the two front steerable wheels (50,53) in land mode locations thereof are located on opposite sides of the vehicle, spaced apart transversely across the vehicle by a first track width;
the two other wheels (51,52) of the four are not connected to the handlebars (54) to be steered thereby and are located at the rear of the vehicle on opposite sides of the vehicle, spaced apart transversely across the vehicle by a second track width greater than the first track width.

5. An amphibious vehicle as claimed in any one of the preceding claims wherein:
a separate spring and damper unit (64,65,66,67) is provided for each wheel.

6. An amphibious vehicle as claimed in any one of the preceding claims wherein:
a track rod (123) is mounted to extend transversely across the vehicle; the track rod (123) is mounted by mounting means which allow the track rod to be slid along the axis thereof transversely across the vehicle by rotation of the handlebars (54); the track rod (123) is pivotally connected at one end to a first front wheel (50) and is pivotally connected at a second end to a second front wheels (53); and the front wheels (50,53) are pivotally mounted on supporting suspension arrangements (103,105) for steering rotation under control of the track rod.

7. An amphibious vehicle as claimed in any one of claims 3 to 6 wherein:
the speed change transmission (61) comprises a manually operable gearbox (72) and a manually operable gear selection means are provided operable by a driver of the vehicle to select one of the gear ratios.

8. An amphibious vehicle as claimed in any one of claims 3 to 6 wherein:
the speed change transmission (61) comprises an automatic gearbox (72).

9. An amphibious vehicle as claimed in any one of claims 3 to 6 wherein:
the speed change transmission (61) comprises a continuously variable transmission (72).

10. An amphibious vehicle as claimed in any one of the preceding claims wherein:
each road wheel is pivoted through 45° or more during retraction.

11. An amphibious vehicle as claimed in any one of the preceding claims wherein:
the front pair of wheels (50,53) steerable by the handlebars are spaced apart transversely across the vehicle by a first track width when in land mode and a rear pair of wheels spaced apart transversely across the vehicle by a second track width when in land mode; and the planing hull has a maximum beam width which is less than both the first and second track widths.

12. An amphibious vehicle as claimed in claim 11 wherein:
the first track width is greater than the second track width.

13. An amphibious vehicle as claimed in any one of the preceding claims wherein:
a separate spring and damper assembly (64,65,66,67) is provided for each wheel.

14. An amphibious vehicle as claimed in any one of the preceding claims wherein:
the planing hull (40) is formed as a single component and the vehicle has one or more deck components (30) all joined to the hull component along a join line which extends around an entire periphery of the vehicle at a level above a water line of the vehicle in water; and
the or at least one of the deck components forms a majority of an upwardly facing surface of the vehicle and is demountable to allow access to the engine located there beneath.

15. An amphibious vehicle as claimed in claim 14 wherein:
the hull (40) and each deck component (30) is formed of a composite of fibres set in resin and localised areas of at least some of the deck components are provided with fibre reinforcement additional to the fibre reinforcement in a remainder of the component(s) to provide a greater structural strength in such areas, whereby reinforced areas provide load paths for transmission of loading of the vehicle and the load paths extend around an entire transversely viewed periphery of the vehicle to resist torsion loads acting to twist a front part of the vehicle relative to a rear part of the vehicle.

16. An amphibious vehicle as claimed in any one of the preceding claims wherein:
the engine (60) is mounted on a frame releasably connected to the hull (40), the vehicle also comprising a transmission (61) connecting the engine to the driven wheel(s), at least part of the transmission also being mounted on the frame.

17. An amphibious vehicle as claimed in claim 16 wherein:
a suspension system (103,105) is provided for the road wheels and the suspension system is also mounted on the frame.

18. An amphibious vehicle as claimed in claim 16 or claim 17 wherein:
a steering mechanism (63) is connected between the handlebars (54) at the front steerable wheels (50,53) and the steering mechanism is also mounted on the frame.

19. An amphibious vehicle as claimed in any one of the preceding claims wherein:
the vehicle body defines a pair of footwell areas (35) spaced apart on both sides of the sit-astride seat (33) with the vehicle body having sill portions positioned laterally outside the footwell areas.

20. An amphibious vehicle as claimed in claim 19 wherein buoyancy chambers are provided in the sill portions of the vehicle.

## Patentansprüche

1. Ein amphibisches Personenwasserfahrzeug (10), umfassend:
einen sattelartigen Sitz (33),
einen Gleitrumpf (40),
wenigstens vier Räder (50, 51, 52, 53), von welchen jedes zwischen einer ausgefahrenen Landmodusposition und einer eingefahrenen Wassermodusposition bewegbar ist, wobei zwei der Räder lenkbare Vorderräder (50, 53) sind, welche wenigstens im Landmodus des Fahrzeuges mit Lenkstangen (54) verbunden sind, welche von einem Fahrer zum Steuern des Fahrzeuges betätigt werden können,
einen Motor (60), welcher im Landmodus des Fahrzeuges mit wenigstens einem der Räder zum Antreiben des Rades verbunden ist, und
Seeantriebsmittel (55) zum Antreiben des Fahrzeuges auf dem Wasser, wobei:
die wenigstens vier Räder jeweils um eine Achse geschwenkt werden, die längs des Fahrzeugs verläuft, wenn sie zwischen dem Landmodus und dem Wassermodus davon bewegt werden.

2. Amphibisches Fahrzeug nach Anspruch 1, wobei:
der Motor (60) die Seeantriebsmittel (55) antreibt, um das Fahrzeug auf dem Wasser anzutreiben.

3. Amphibisches Fahrzeug nach Anspruch 1 oder 2, zusätzlich umfassend:
ein Gangwechselgetriebe (61), das dem Fahrzeug in Vorwärtsbewegung an Land eine Mehrzahl verschiedener Getriebeübersetzungen zwischen dem Motor und dem angetriebenen Rad / den angetriebenen Rädern zur Verfügung stellt.

4. Amphibisches Fahrzeug nach einem der vorhergehenden Ansprüche, wobei:
sich die zwei steuerbaren Vorderräder (50, 53) in deren Landmodusposition an entgegengesetzten Seiten des Fahrzeuges befinden, welche quer zum Fahrzeug durch eine erste Spurbreite voneinander beabstandet sind;
die zwei anderen Räder (51, 52) der vier Räder nicht mit den Lenkstangen (54), verbunden sind, um dadurch gelenkt zu werden,
und sich am Heck des Fahrzeuges an entgegengesetzten Seiten des Fahrzeuges befinden, welche quer zum Fahrzeug durch eine zweite Spurbreite voneinander beabstandet sind, welche größer als die erste Spurbreite ist.

5. Amphibisches Fahrzeug nach einem der vorhergehenden Ansprüche, wobei:
eine getrennte Feder- und Dämpfereinheit (64, 65, 66, 67) für jedes Rad bereitgestellt ist.

6. Amphibisches Fahrzeug nach einem der vorhergehenden Ansprüche, wobei:
eine Spurstange (123) montiert ist, um sich quer zum Fahrzeug zu erstrecken; wobei die Spurstange (123) durch Befestigungsmittel befestigt ist, welche es der Spurstange (123) erlauben, entlang deren Achse transversal zum Fahrzeug durch Rotation der Lenkstangen (54) sich zu verschieben; wobei die Spurstange (123) an einem Ende schwenkbar mit einem ersten Vorderrad (50) verbunden ist und
schwenkbar an einem zweiten Ende mit einem zweiten Vorderrad (53) verbunden ist und die Vorderräder (50, 53) schwenkbar an Trägeraufhängungsvorrichtungen (103, 105) für eine Lenkdrehung durch Regelung/Steuerung der Spurstange (123) angeordnet sind.

7. Amphibisches Fahrzeug nach einem der Ansprüche 3 bis 6, wobei:
das Gangwechselgetriebe (61) ein manuell betätigbares Getriebe (72) umfasst und manuell betätigbare Gangauswahlmittel bereitgestellt sind, welche durch einen Fahrer des Fahrzeuges betätigbar sind, um eine der Getriebeübersetzungen auszuwählen.

8. Amphibisches Fahrzeug nach einem der Ansprüche 3 bis 6, wobei:
das Gangwechselgetriebe (61) ein stufenloses Getriebe (72) umfasst.

9. Amphibisches Fahrzeug nach einem der Ansprüche 3 bis 6, wobei:
das Gangwechselgetriebe (61) ein stufenloses Getriebe (72) umfasst.

10. Amphibisches Fahrzeug nach einem der vorhergehenden Ansprüche, wobei: jedes Straßenrad während des Einfahrens um 45° oder mehr geschwenkt wird.

11. Amphibisches Fahrzeug nach einem der vorhergehenden Ansprüche, wobei:
das vordere Paar von Rädern (50, 53), die durch die Lenkstangen lenkbar sind, im Landmodus quer zum Fahrzeug durch eine ersten Spurbreite beabstandet sind und ein hinteres Paar von Rädern, die im Landmodus quer zum Fahrzeug durch eine zweite Spurbreite beabstandet sind; und der Gleittrumpf eine maximale Trägerbreite aufweist, welche kleiner als sowohl die erste als auch die zweite Spurbreite ist.

12. Amphibisches Fahrzeug nach Anspruch 11, wobei die erste Spurbreite größer als die zweite Spurbreite ist.

13. Amphibisches Fahrzeug nach einem der vorhergehenden Ansprüche, wobei:
eine getrennte Feder- und Dämpferanordnung (64, 65, 66, 67) für jedes Rad bereitgestellt ist.

14. Amphibisches Fahrzeug nach einem der vorhergehenden Ansprüche, wobei:
der Gleittrumpf (40) als eine Einzelkomponente gebildet ist und das Fahrzeug eine oder mehrere Deckkomponenten (30) aufweist, die alle mit der Rumpfkomponente entlang einer Verbindungslinie verbunden sind, die sich um einen Gesamtumfang des Fahrzeuges auf einer Höhe über der Wasserlinie des Fahrzeuges im Wasser erstreckt; und
die oder wenigstens eine von den Deckkomponenten einen Großteil einer nach oben gerichteten Fläche des Fahrzeuges bildet und
abnehmbar ist, um einen Zugang zu dem sich darunter befindlichen Motor zu erlauben.

15. Amphibisches Fahrzeug nach Anspruch 14, wobei:
der Rumpf (40) und jede Deckkomponente (30) aus einem mit Harz/Kunstharz gebundenem Faserverbund gebildet ist, und wobei lokalisierte Bereiche von wenigstens einigen von den Deckkomponenten mit Faserverstärkungen ausgestattet sind,
zusätzlich zu den Faserverstärkungen in einem Rest der Komponente/der Komponenten, um eine größere strukturelle Stärke in derartigen Bereichen vorzusehen, wodurch verstärkte Bereiche Lastpfade für eine Übertragung von Belastungen des Fahrzeuges bereitstellen und die Lastpfade sich um einen Gesamtumfang des Fahrzeuges in einer Queransicht erstrecken, um Torsionslasten zu widerstehen, die zum Verdrehen eines vorderen Abschnitts des Fahrzeuges relativ zu einem hinteren Abschnitt des Fahrzeuges wirken.

16. Amphibisches Fahrzeug nach einem der vorhergehenden Ansprüche, wobei:
der Motor (60) an einem Rahmen montiert ist, welcher lösbar mit dem Rumpf (40) verbunden ist, wobei das Fahrzeug ferner ein Getriebe (61) umfasst, das den Motor mit dem angetriebenen Rad / den angetriebenen Rädern verbindet, wobei wenigstens ein Teil des Getriebes auch an dem Rahmen montiert ist.

17. Amphibisches Fahrzeug nach Anspruch 16, wobei:
ein Aufhängungssystem (103, 105) für die Straßenräder bereitgestellt ist und das Aufhängungssystem ferner an dem Rahmen montiert ist.

18. Amphibisches Fahrzeug nach Anspruch 16 oder 17, wobei:
ein Lenkmechanismus (63) zwischen den Lenkstangen (54) an den vorderen steuerbaren Rädern (50, 53) verbunden ist und der Lenkmechanismus ferner an dem Rahmen montiert ist.

19. Amphibisches Fahrzeug nach einem der vorhergehenden Ansprüche, wobei:
der Fahrzeugkörper ein Paar von Fußraumbereichen (35) definiert, die an beiden Seiten des sattelartigen Sitzes (33) beabstandet sind, wobei der Fahrzeugkörper Schwellenabschnitte aufweist, die lateral außerhalb der Fußraumbereiche angeordnet sind.

20. Amphibisches Fahrzeug nach Anspruch 19, wobei Auftriebskammern in den Schwellenabschnitten des Fahrzeuges bereitgestellt sind.

## Revendications

1. Véhicule amphibie motomarine (10) comprenant :
un siège (33) où l'on s'assoie à califourchon,
une coque planante (40),
au moins quatre roues (50, 51, 52, 53), chacune desquelles change entre un mode étendu sur terre et un mode rentré dans l'eau, deux des roues étant des roues avant orientables (50, 53) qui sont, au moins sur terre, reliées aux guidons (54) qui peuvent être manoeuvrés par un conducteur pour diriger le véhicule,
un moteur (60) qui, sur terre, est relié à au moins l'une des roues pour entraîner la roue, et
un moyen de propulsion marine (55) pour propulser le véhicule sur l'eau, dans lequel :
chacune des au moins quatre roues pivotent autour d'un axe se déplaçant vers l'avant et vers l'arrière le long du véhicule lors de son déplacement entre le mode terrestre et le mode nautique.

2. Véhicule amphibie tel que revendiqué dans la revendication 1, dans lequel :
le moteur (60) entraîne le moyen de propulsion marine (55) pour qu'il propulse le véhicule dans l'eau.

3. Véhicule amphibie tel que revendiqué dans la revendication 1 ou la revendication 2 comprenant en outre :
une transmission à changement de vitesse (61) procurant au véhicule lorsqu'il roule vers l'avant sur la terre une pluralité de différents rapports de vitesse entre le moteur et la/les roue(s) motrice(s).

4. Véhicule amphibie tel que revendiqué dans l'une quelconque des revendications précédentes, dans lequel :
les deux roues orientables avant (50, 53) sur terre sont situées sur les côtés opposés du véhicule, transversalement espacées à travers le véhicule par une première largeur de piste ;
les deux autres roues (51, 52) parmi les quatre ne sont pas reliées aux guidons (54) à braquer ainsi et sont situées à l'arrière du véhicule sur les côtés opposés du véhicule, transversalement espacées à travers le véhicule par une deuxième largeur de piste plus grande que la première largeur de piste.

5. Véhicule amphibie tel que revendiqué dans l'une quelconque des revendications précédentes, dans lequel :
un ressort séparé et une unité d'amortissement (64, 65, 66, 67) sont prévus pour chaque roue.

6. Véhicule amphibie tel que revendiqué dans l'une quelconque des revendications précédentes, dans lequel :
une barre d'accouplement (123) est montée de manière à s'étendre transversalement à travers le véhicule ; la barre d'accouplement (123) est montée par un moyen de montage permettant à la barre d'accouplement de glisser le long de son axe transversalement à travers le véhicule par une rotation des guidons (54) ; la barre d'accouplement (123) est reliée en pivotement au niveau d'une extrémité à une première roue avant (50) et est reliée en pivotement au niveau d'une deuxième extrémité à une deuxième roue avant (53) ; et les roues avant (50, 53) sont montées en pivotement sur les agencements de suspension en support (103, 105) pour une rotation de direction sous la commande de la barre d'accouplement.

7. Véhicule amphibie tel que revendiqué dans l'une quelconque des revendications 3 à 6, dans lequel :
la transmission à changement de vitesse (61) comprend une boîte de vitesses manuelle (72) et un moyen de sélection de vitesse manuellement actionné pouvant être manoeuvré par un conducteur du véhicule pour sélectionner l'un des rapports de vitesse.

8. Véhicule amphibie tel que revendiqué dans l'une quelconque des revendications 3 à 6, dans lequel :
la transmission à changement de vitesse (61) comprend une boîte de vitesses automatique (72).

9. Véhicule amphibie tel que revendiqué dans l'une quelconque des revendications 3 à 6, dans lequel :
la transmission à changement de vitesse (61) comprend une transmission à variation continue (72).

10. Véhicule amphibie tel que revendiqué dans l'une quelconque des revendications précédentes, dans lequel :
chaque roue de roulement tourne de 45° ou plus lors de la rétraction.

11. Véhicule amphibie tel que revendiqué dans l'une quelconque des revendications précédentes, dans lequel :
la paire de roues orientables avant (50, 53) par les guidons sont transversalement espacées à travers le véhicule par une première largeur de piste sur la terre et une paire de roues arrière transversalement espacées à travers le véhicule par une deuxième largeur de piste lorsqu'il est sur terre ; et la coque planante a une largeur de faisceau maximale qui est inférieure aux première et deuxième largeurs de piste.

12. Véhicule amphibie tel que revendiqué dans la revendication 11, dans lequel :
la première largeur de piste est supérieure à la deuxième largeur de piste.

13. Véhicule amphibie tel que revendiqué dans l'une quelconque des revendications précédentes, dans lequel :
un ressort séparé et un ensemble d'amortisseurs (64, 65, 66, 67) sont prévus pour chaque roue.

14. Véhicule amphibie tel que revendiqué dans l'une quelconque des revendications précédentes, dans lequel :
la coque planante (40) est formée d'une seule pièce et le véhicule comporte un ou plusieurs composants de pont (30) tous reliés au composant de coque le long d'une ligne de jointure qui s'étend autour d'une périphérie entière du véhicule à un niveau au-dessus d'une ligne d'eau du véhicule dans l'eau ; et
ou au moins l'un des composants de pont forme la majorité d'une surface regardant vers le haut du véhicule et qui est démontable pour permettre d'accéder au moteur situé au-dessous.

15. Véhicule amphibie tel que revendiqué dans la revendication 14, dans lequel :
la coque (40) et chaque composant de pont (30) sont formés d'un composite de fibres faites de résine et des zones localisées d'au moins certains composants parmi les composants de pont sont dotés d'un renfort de fibre en plus du renfort de fibre dans le/les composant(s) restant(s) pour fournir une plus grande résistance structurelle dans ces zones, grâce à quoi les zones renforcées fournissent des chemins de charge pour la transmission du chargement du véhicule et les chemins de charge s'étendent autour d'une périphérie entière transversalement vue du véhicule pour résister aux charges de torsion agissant pour tordre une partie avant du véhicule par rapport à une partie arrière du véhicule.

16. Véhicule amphibie tel que revendiqué dans l'une quelconque des revendications précédentes, dans lequel :
le moteur (60) est monté sur un châssis relié à la coque (40) de manière amovible, le véhicule comprenant également une transmission (61) reliant le moteur à la/aux roue(s) motrice(s), au moins une partie de la transmission étant également montée sur le châssis.

17. Véhicule amphibie tel que revendiqué dans la revendication 16, dans lequel :
un système de suspension (103, 105) est prévu pour les roues de roulement et le système de suspension est également monté sur le châssis.

18. Véhicule amphibie tel que revendiqué dans la revendication 16 ou la revendication 17 dans lequel :
un mécanisme de direction (63) est relié entre les guidons (54) au niveau des roues orientables avant (50, 53) et le mécanisme de direction est également monté sur le châssis.

19. Véhicule amphibie tel que revendiqué dans l'une quelconque des revendications précédentes, dans lequel :
la carrosserie du véhicule définit une paire de zones pour les pieds (35) séparées sur les deux côtés du siège (33) où l'on s'assoie à califourchon avec la carrosserie du véhicule ayant des parties de seuil positionnées latéralement à l'extérieur des zones pour les pieds.

20. Véhicule amphibie tel que revendiqué dans la revendication 19, dans lequel les chambres de flottabilité sont prévues dans les parties de seuil du véhicule.
